# EUROPEAN PATENT APPLICATION

(11) **EP 4 645 141 A1**
(43) Date of publication of application: **05.11.2025**
(21) Application number: 25170047.2
(22) Date of filing: 11.04.2025
(51) Int. Cl.: G06F 21/60, G06F 21/62, H04L 9/40

(54) **SYSTEMS AND METHODS FOR MANAGING ACCESS CONTROL TO ONE OR MORE RESOURCES**

(30) Priority: 29.04.2024 US 202463639834 P; 16.08.2024 US 202418806934
(71) Applicant: Palantir Technologies Inc., Denver, CO 80202 (US)
(72) Inventor: AGRAWAL, Akshay, Jersey City (US); COOKE, Dylan, Hilton Head (US); CHAN, Hubert, Belmont (US); PIERIS, Christofi, London (GB); MUSTIÈRE, Paul, London (GB); ÖHRNER, Noah, London (GB); TAHERI, Alexander, Neptune Beach (US); FINK, Robert, Munich (DE); BAKER, James, Maidenhead (GB); VIEIRA COIMBRA, Felipe, London (GB); VERMA, Shubhangee, London (GB); WICKHAM, Jack, London (GB); CARRAS, Katherine, Toronto (CA); MASSIE, Craig, London (GB)
(74) Representative: Derry, Paul Stefan

(57) **Abstract**

In some examples, systems and methods for managing access control to one or more resources are provided. An example method includes receiving a permission request for a user to access the one or more resources, generating an access request based at least in part on the permission request, notifying one or more reviewers to review the access request, receiving an indication of the access request being approved, and automatically granting permission to the user to access the one or more resources.

## Description

### CROSS REFERENCE TO RELATED APPLICATIONS

This application claims priority to U.S. Provisional Application No. 63/639,834, entitled "SYSTEMS AND METHODS FOR MANAGING ACCESS CONTROL TO ONE OR MORE RESOURCES," and filed on April 29, 2024, and to U.S. Application No. 18/806,934, also entitled "SYSTEMS AND METHODS FOR MANAGING ACCESS CONTROL TO ONE OR MORE RESOURCES," and filed on August 16, 2024.

### TECHNICAL FIELD

Certain embodiments of the present disclosure relate to managing access control to one or more resources. More particularly, certain embodiments of the present disclosure relate to managing access control to one or more resources based on one or more permission requests for a user.

### BACKGROUND

Access control software for digital resources can be used to govern access to electronic data, applications, and/or systems. For example, the access control software can be used to define user permissions to access certain information.

Hence, it is desirable to improve techniques for managing access control to one or more resources.

### SUMMARY

Certain embodiments of the present disclosure relate to managing access control to one or more resources. More particularly, certain embodiments of the present disclosure relate to managing access control to one or more resources based on one or more permission requests for a user.

At least some aspects of the present disclosure are directed to a method for managing access control to one or more resources. In some examples, the method includes receiving a permission request for a user to access the one or more resources, generating an access request based at least in part on the permission request, notifying one or more reviewers to review the access request, receiving an indication of the access request being approved, and automatically granting permission to the user to access the one or more resources.

At least some aspects of the present disclosure are directed to a system for managing access control to one or more resources. In some examples, the system includes one or more processors and one or more memories storing instructions that, when executed by the one or more processors, cause the system to perform a set of operations. In some examples, the set of operations include: receiving a permission request for a user to access the one or more resources, generating an access request based at least in part on the permission request, notifying one or more reviewers to review the access request, receiving an indication of the access request being approved, and automatically granting permission to the user to access the one or more resources.

At least some aspects of the present disclosure are directed to a method for managing access control to one or more resources. In some examples, the method includes receiving a permission request for a user to access the one or more resources and generating an access request. In some examples, the access request is generated by determining one or more desired levels of access. In some examples, each desired level of access of the one or more desired levels of access can provide the user access to the one or more resources. In some examples, the access request is further generated by determining one or more differences between the one or more desired levels of access and an existing level of access for the user. In some examples, each difference of the one or more differences is a respective difference between a desired level of access of the one or more levels of access and the existing level of access. In some examples, the access request is generated based on the one or more difference. In some examples, the method further includes receiving an indication of the access request being approved, and automatically granting permission to the user to access the one or more resources.

Depending upon embodiment, one or more benefits may be achieved. These benefits and various additional objects, features and advantages of the present disclosure can be fully appreciated with reference to the detailed description and accompanying drawings that follow.

### BRIEF DESCRIPTION OF THE DRAWINGS

FIG. 1 illustrates a simplified diagram showing a method for managing access control to one or more resources, according to certain embodiments of the present disclosure.
FIG. 2 illustrates a simplified diagram showing a method for managing access control to one or more resources, according to certain embodiments of the present disclosure.
FIG. 3 illustrates an example system for managing access control to one or more resources, according to certain embodiments of the present disclosure.
FIG. 4 illustrates an example graphical user interface, according to certain embodiments of the present disclosure.
FIG. 5 illustrates an example graphical user interface, according to certain embodiments of the present disclosure.
FIG. 6 illustrates an example graphical user interface, according to certain embodiments of the present disclosure.
FIG. 7 illustrates an example graphical user interface, according to certain embodiments of the present disclosure.
FIG. 8 illustrates an example graphical user interface, according to certain embodiments of the present disclosure.
FIG. 9 illustrates an example graphical user interface, according to certain embodiments of the present disclosure.
FIG. 10 illustrates an example graphical user interface, according to certain embodiments of the present disclosure.
FIG. 11 illustrates an example graphical user interface, according to certain embodiments of the present disclosure.
FIG. 12 illustrates an example graphical user interface, according to certain embodiments of the present disclosure.
FIG. 13 illustrates a simplified diagram showing a computing system for managing access control to one or more resources, according to certain embodiments of the present disclosure.

### DETAILED DESCRIPTION

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The use of numerical ranges by endpoints includes all numbers within that range (e.g., 1 to 5 includes 1, 1.5, 2, 2.75, 3, 3.80, 4, and 5) and any range within that range.

Although illustrative methods may be represented by one or more drawings (e.g., flow diagrams, communication flows, etc.), the drawings should not be interpreted as implying any requirement of, or particular order among or between, various steps disclosed herein. However, some embodiments may require certain steps and/or certain orders between certain steps, as may be explicitly described herein and/or as may be understood from the nature of the steps themselves (e.g., the performance of some steps may depend on the outcome of a previous step). Additionally, a "set," "subset," or "group" of items (e.g., inputs, algorithms, data values, etc.) may include one or more items and, similarly, a subset or subgroup of items may include one or more items. A "plurality" means more than one.

As used herein, the term "based on" is not meant to be restrictive, but rather indicates that a determination, identification, prediction, calculation, and/or the like, is performed by using, at least, the term following "based on" as an input. For example, predicting an outcome based on a particular piece of information may additionally, or alternatively, base the same determination on another piece of information. As used herein, the term "receive" or "receiving" means obtaining from a data repository (e.g., database), from another system or service, from another software, or from another software component in a same software. In certain embodiments, the term "access" or "accessing" means retrieving data or information, and/or generating data or information.

Conventional systems and methods are very inefficient, in terms of time and computing resources, at managing access control for users to access one or more resources. Such inefficiencies are even more prevalent with relatively complex data management systems. For example, conventional systems may use simple security hierarchies for accessing one or more resources, such as high security, medium security, and low security. However, in complex systems with more granular permission data, a user may have to be granted multiple different types of permissions to gain access to a resource. Using conventional systems, navigating all of the multiple different types of permissions and requesting an administrator to update the multiple different types of permissions can be very difficult and inefficient (e.g., in terms of time and/or computing resources).

Various embodiments of the present disclosure can achieve benefits and/or improvements by a computing system for managing access control to one or more resources. In some embodiments, benefits include improved efficiency for granting users access to resources associated with multiple different types of permissions. For example, the improved efficiency can include updating permissions to grant a user access to resources faster than conventional systems. In some examples, the improved efficiency includes determining what permissions, from a plurality of different types of permissions, need to be updated to grant a user access to a resource. In some embodiments, benefits include improved security for calculating a minimum amount of permissions that need to be updated, such that a user is not granted too broad of access. In some embodiments, benefits include an improved user experience for requesters submitting requests to access one or more resources. In some embodiments, benefits include an improved user experience for reviewers reviewing requests for users to access one or more resources. Additional and/or alternative benefits should be recognized by those of ordinary skill in the art, at least in light of the teachings provided herein.

In some examples, a wide variety of information governance tools and processes are used to protect digital data in organizations. In some examples, complexity of such tools and processes is increased in certain organizations that handle sensitive and/or personal data. In some examples, organizations can be subject to laws requiring them to protect the data in certain ways. In some examples, the laws sometimes even encode one or more mechanisms of protection. In some examples, the one or more mechanisms encoded in laws include context-based access control (CBAC). In some examples, CBAC is a method of restricting access to resources based on the context of an access request.

In conventional systems, users are often able to see or discover all resources. In such conventional systems, users can request access to the resources they do not have access to. In conventional systems, access in a role associated with a resource is governed by a single security primitive: being added to a single group or granted a direct role associated with the resource. However, such rudimentary techniques can be inefficient and sometimes impractical for managing complex data systems with access to resources governed by a plurality of different security primitives.

As discussed herein, a "resource" can refer to one or more projects, data associated with the one or more projects, one or more files, one or more datasets, and/or other types of resources that may be accessible via a computing device, as will be recognized by those of ordinary skill in the art. For example, the resource can include a text document, a spreadsheet, a presentation, a portable document format (PDF), an image, an audio file, a video file, a form, a portal, a database, and/or control of a hardware device. The resource examples provided are merely examples and are not intended to limit the scope of the disclosure, as other examples of resources should be recognized by those of ordinary skill in the art.

In some examples according to embodiments of the present disclosure, gaining access to a resource is more complex than being added to a single group or granted a direct role associated with the resource. In certain examples, a resource is governed by a plurality of different permutations of a plurality of different security primitives. In some examples, the access to a resource is governed by being part of a correct set of users (e.g., engineering data can only be accessed by engineers, not by sales people who may only be allowed to interact with sales data). In some examples, the access to a resource is governed by having a correct security level (e.g., having permission to access a high security level is needed to access high security information). In some examples, the access to a resource is governed by providing appropriate justification for why the access should be granted, despite a user otherwise having a certain role or being part of a certain group (e.g., people may not be able to discover or gain access to the resource, unless it is determined that they need to know information associated with the resource, despite being part of a certain role or group). In some examples, the access to a resource is governed by determining that a user has specific privileges regardless of their role. For example, data associated with a Company A may only be able to be accessed by executives of the Company A. As an example, legal data may only be accessible to individuals who have certain legal qualifications (e.g., lawyers) to view the legal data. As an example, medical data may only be accessible to individuals who have certain medical qualification (e.g., doctors, individuals who have completed certain training, etc.) to view the medical data. In embodiments, one or more aspects of the above complexities for managing user access to resources can be controlled.

In some examples, systems provided herein enable users to request access for themselves. In some examples, systems enable admins to request access for others. In some examples, systems enable reviewers to comprehensively review incoming access requests in compliance with individual requirements of security primitives.

In some examples, users can request access to a resource for themselves. In some examples, the users may or may not be able to see the access requirements for the resource. In some examples, a single access request could require any permutation of the above discussed security primitives. In some examples, the security primitives are abstracted away from the user for compliance purposes and/or to provide an improved user experience via a simpler user-interface. In some examples, mechanisms compute a current level of access an impacted user has and compares the current level of access to the level of access required to access a resource. In some examples, the resulting difference in access levels is what is requested in the resulting request for the user.

In some examples, the user is unable to request access to arbitrary and/or custom permissions. In some examples, such an inability is configured in systems to prevent misuse by users. In some examples, mechanisms only allow creation of requests starting from a resource that a user is requesting access to. In some examples, depending on the permissions of the user, the resulting request may or may not be locked down / hidden from the requester and may only be visible to certain reviewers. In some examples, checkpoints for requests can be configured and some requests cannot be processed without the checkpoints being completed. In some examples, the checkpoints can be used to audit the approval of requests (e.g., why was a request granted, when was the request granted, by whom was the request granted, who generated the request, what did granting the request provide access to, etc.).

In some examples, users can request access on behalf of others. In some examples, for improved security, the user that needs access to a resource may not have the ability to discover the resource to begin with, such that it is beneficial for another individual to be able to submit the request on behalf of the user. In some examples, mechanisms computes what level of request visibility the requester needs compared to the impacted user and locks down the request accordingly (e.g., to limit what information is shown to the requester and/or impacted user, thereby improving security/privacy for a system in which access is being requested).

In some examples, admins can configure a request mechanism (e.g., a user-interface for creating requests) to suit specific use cases of an organization. In some examples, admins can configure review requirements in-line with an n-eyes (e.g., two-eyes, three-eyes, four-eyes, etc.) principle. For example, an admin can configure policies which say "two people from finance, three people from data infrastructure, and a specific manager need to approve a request for access to a particular resource for the request to be considered approved. In some examples, a resource can have multiple groups who have access to it. In some examples, admins can restrict which of groups can be requested access to by users to gain effective access to the resource.

In some examples, blind requests can be made, such as by users or on behalf of users. In some examples, users can be directly linked to a resource which they may not even have the capability to discover. In some examples, even confirming that the link is a valid resource could give away information that the user is not supposed to have. In some examples, any time the user reaches a resource identifier which they do not have the ability to discover, systems provided herein give the user the ability to request access to the resource. In some examples, the user can request access to the resource even on malformed and/or non-existent resource links. In some examples, the system knows and/or can determine which of the requests created from such links are a valid request based on if the resource actually exists or not. In some examples, the system creates valid requests for valid resource and performs the computation described above for determining a difference between a user's current level of access and desired level of access to gain access to a resource.

In some examples, requests for access to a resource follow a particular lifecycle. In some examples, one the request is created, one or more reviewers are notified of the request. In some examples, as the request progresses toward approval, some cases may prompt the requester/impacted user to take one or more actions to further advance the request. For example, the one or more actions can include uploading a document, completing a checkpoint, submitting a justification, performing certain training, etc. Additional and/or alternative examples of actions that a requester or impacted user may be prompted to take should be recognized by those of ordinary skill in the art. In some examples, by taking the actions, the status of the request is automatically updated. In some examples, one or more reviewers are notified at particular times to review the request based on the status of the request. For example, after a first reviewer approves a request, the request may advance to a second reviewer to approve the request. As an example, after a user takes a certain action (e.g., completing required training), the request may advance to a reviewer to approve the request.

In some examples, a reviewer of a request can request changes from the requester and/or impacted user. For example, the reviewer can request that the change include a different requested role, or group, or degree of access, before granting the request. In some examples, if a request is approved, the request can be automatically processed, such that accurate permissions are granted to a user based on computations performed by techniques provided herein. In some examples, if a request is rejected, the request can be closed or archived. In some examples, closed or archived requests can be later re-opened or edited. In some examples, approved requests can offer the ability for previously granted access to be revoked. In some examples, a previously granted request can be edited. In some examples, a new request can override a previously granted request (e.g., by revoking markings and/or group access from a user who was previously granted access to resources associated with the markings or group access).

In some examples, a group might have access to the requested resource and the impacted user might be part of the group. In some examples, the group may or may not have the complete set of security primitives for effective access to the requested resource. In some examples, systems provided herein compute what permissions the user needs for effective access to the resource by taking into account the group's access. In some examples, the system traverses a number of groups to calculate current and effective access to determine whether the user should be added to another group. In some examples, the number of groups traversed may be limited for computational efficiency.

In some examples, systems provided herein are capable of computing complex permission differences and requirements for a user to access a resource based on permutations of security primitives. In some examples, a plurality of different security primitives can be used to control access to a resource. In some examples, mechanisms provided herein can automatically invoke/process updating permissions in a system to control access to one or more resources for one or more users. In some examples, systems provided herein minimize disclosure of information that is being protected by a system, such as by allowing for the blind access requests discussed herein.

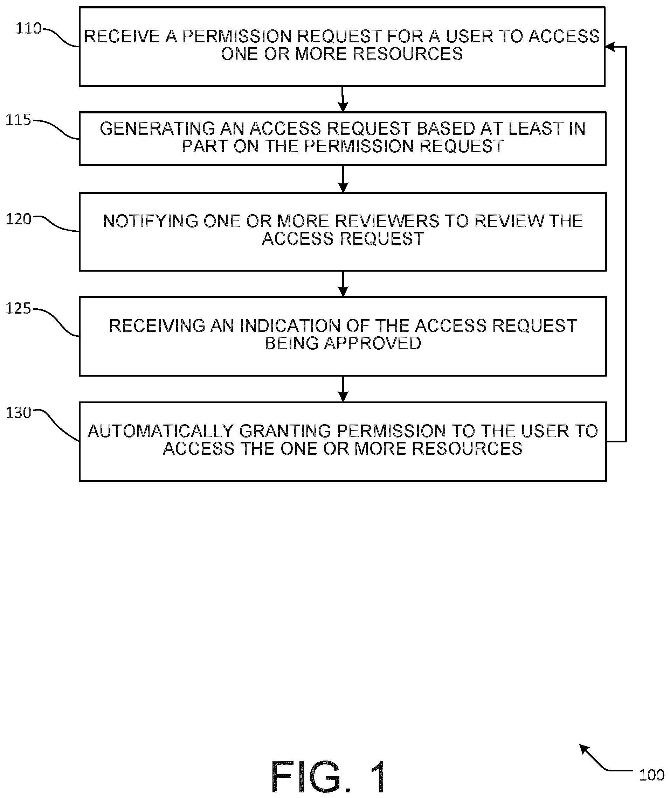

FIG. 1 is a simplified diagram showing a method 100 for managing access control to one or more resources according to certain embodiments of the present disclosure. This diagram is merely an example. One of ordinary skill in the art would recognize many variations, alternatives, and modifications. The method 100 for managing access control to one or more resources includes processes 110, 115, 120, 125, and 130. Although the above has been shown using a selected group of processes for the method 100 for managing access control to one or more resources, there can be many alternatives, modifications, and variations. For example, some of the processes may be expanded and/or combined. Other processes may be inserted into those noted above. Depending upon the embodiments, the sequence of processes may be interchanged with others replaced. Further details of these processes are found throughout the present disclosure.

According to some embodiments, at the process 110, a permission request for a user to access one or more resources is received. In some examples, the one or more resources include one or more projects, or one or more files, or one or more datasets, or one or more other types of resources that may be accessible via a computing device, as will be recognized by those of ordinary skill in the art. For example, the resources can include a text document, a spreadsheet, a presentation, a portable document format (PDF), an image, an audio file, a video file, a form, a portal, control of a hardware device, and/or a database. The resource examples provided are merely examples and are not intended to limit the scope of the disclosure, as other examples of resources should be recognized by those of ordinary skill in the art.

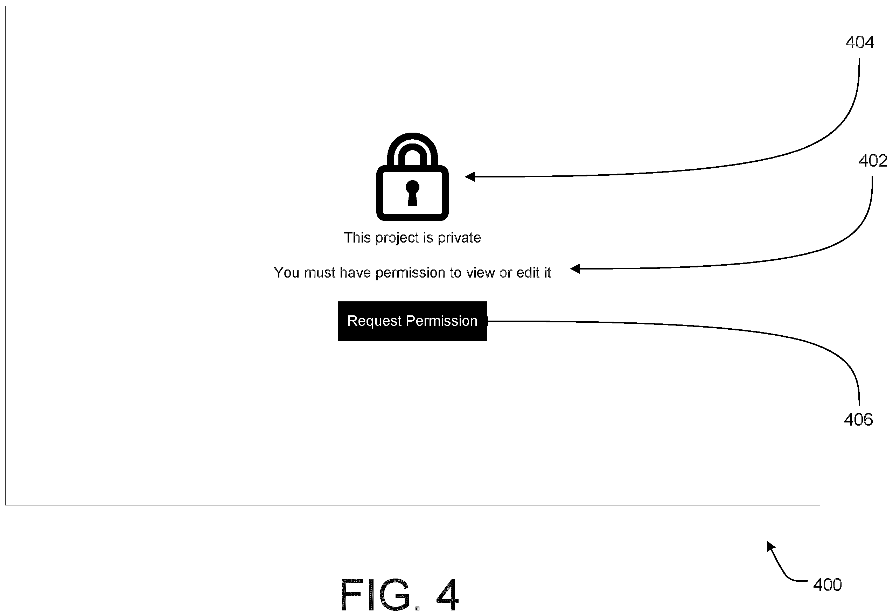

In some examples, prior to receiving the permission request, the user is denied access to at least one resource of the one or more resources. In some examples, a user interface is displayed for a requester to request permission for the user to access the one or more resources. In some examples, the requester can be the user or a person who is not the user (e.g., an administrator). In some examples, the user interface can be the same as or similar to the user interfaces 400, 500, 600, 700, 800, 900, 1000, 1100, and/or 1200 discussed later herein with respect to FIGS. 4, 5, 6, 7, 8, 9, 10, 11, and/or 12. In some examples, the permission request is received via the displayed user interface.

In some examples, the one or more resources include a marking. In some examples, the marking corresponds to at least one selected from a group consisting of a sensitivity level, a training level, a user type, and an organization type. For example, a user may be unable to access resources with a particular marking unless the user has a sensitivity clearance that satisfies the sensitivity level of the particular marking. As an example, a user may be unable to access resources with a particular marking unless the user has certain training that satisfies the training level of the particular marking. As an example, a user may be unable to access resources with a particular marking unless the user has a certain title that satisfies the user type of the particular marking. As an example, a user may be unable to access resources with a particular marking unless the user is part of a certain organization that satisfies the organization type of the particular marking.

In some examples, the permission request includes an indication (e.g., prompt) indicating why the user should have access to the one or more resources. In some examples, the permission request is a blind permission request and does not include an indication indicating why the user should have access. For example, a user may not know why they need access to the one or more resources, besides perhaps being told to click on a link, or request access to a resource about which they lack context.

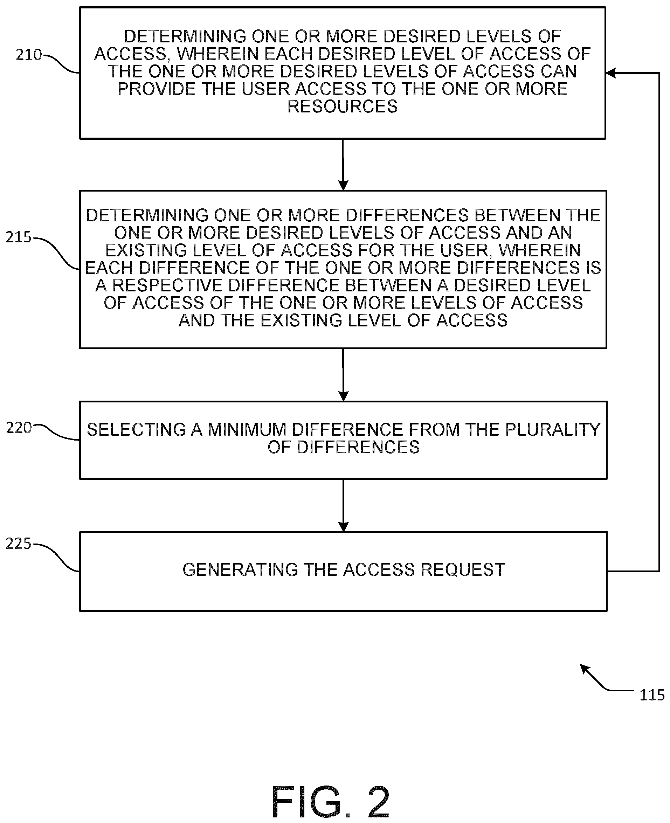

According to some embodiments, at the process 115, an access request is generated based at least in part on the permission request. In some examples, the generating an access request is described in further detail with respect to FIG. 2. In some examples, the generating an access request includes determining a desired level of access for the user to access the one or more resources. In some examples, the generating an access request includes determining a difference between the desired level of access and an existing level of access for the user. In some examples, the access request is generated based at least in part on the difference between the desired level of access and an existing level of access for the user.

In some examples, the generating an access request includes determining a plurality of desired levels of access. In some examples, each desired level of access of the plurality of desired levels of access can provide the user with access to the one or more resources. In some examples, a plurality of differences are determined between the plurality of desired levels of access and an existing level of access for the user. For example, a first difference may be determined between a first desired level of access and the existing level of access, and a second difference may be determined between a second desired level of access and the existing level of access. In some examples, each difference of the plurality of differences is a respective difference between a desired level of access of the plurality of desired levels of access and the existing level of access. In some examples, a minimum difference from the plurality of differences is selected. In some examples, the minimum difference is a difference that corresponds to the fewest permission changes for a user and/or that corresponds to the user gaining access to the fewest newest resources. In some examples, the access request is generated based at least in part on the minimum difference.

According to some embodiments, at the process 120, one or more reviewers are notified to review the access request. In some examples, the requester (e.g., the user, the administrator) and/or the one or more reviewers are prompted to take one or more actions. For example, the one or more actions may be required to be completed before advancing the access request to approval. In some examples, the one or more actions include uploading a document and/or completing a checkpoint. In some examples, the one or more actions include getting an additional reviewer to approve of the request, requesting additional information from a requester, completing a training, applying for a certification, and/or providing additional context related to the request.

In some examples, the requester and/or the one or more reviewers are asked to update the permission request for the user to access the one or more resources. For example, the ask can include asking to update a group, role, access duration, and/or justification associated with the request. In some examples, in response to the asking, an updated permission request is received.

According to some embodiments, at the process 125, an indication of the access request being approved is received. For example, a reviewer may provide input to a user interface to approve the access request. In some examples, the input can include a selection, text, an upload, and/or another type of input that may be recognized by those of ordinary skill in the art.

In some examples, an indication of the access request being denied is received. In such examples, the access request may be closed or archived. In some examples, the access request may be approved in-part and denied in-part. In such examples, a requester may need to seek additional approval to access the one or more resources.

According to some embodiments, at the process 130, permission is granted to the user to access the one or more resources. In some examples, the permission is automatically granted. In some examples, once the permission is granted, the user is able to access the one or more resources. In some examples, once the permission is granted, the user may be able to access additional resources, other than the one or more resources, but that are associated with the one or more resources. For example, the additional resources may be associated with the same group and/or the same markings. In some examples, the user may be able to gain access to only the one or more resources.

In some embodiments, method 100 may terminate at process 130. In some embodiments, method 100 may return to process 110 (or any other process from method 100) to provide an iterative loop, such as of receiving a permission request, generating an access request based on the permission request, getting approval for the permission request, and granting permission to the user to access the one or more resources.

FIG. 2 is a simplified diagram showing a method 200 for generating an access request according to certain embodiments of the present disclosure. This diagram is merely an example. One of ordinary skill in the art would recognize many variations, alternatives, and modifications. The method 200 for generating an access request includes processes 210, 215, 220, and 225. Although the above has been shown using a selected group of processes for the method 200 for generating an access request, there can be many alternatives, modifications, and variations. For example, some of the processes may be expanded and/or combined. Other processes may be inserted into those noted above. Depending upon the embodiments, the sequence of processes may be interchanged with others replaced. Further details of these processes are found throughout the present disclosure.

In some examples, the method 200 for generating an access request can be a subprocess of the process 115 for generating an access request based at least in part on the permission request. However, in some examples, the method 200 can be performed independent of one or more aspects of method 100.

According to some embodiments, at the process 210, one or more desired levels of access for a user are determined. In some examples, each desired level of access of the one or more desired levels of access can provide the user access to the one or more resources. In some examples, the desired levels of access include being part of one or more groups, having one or more roles, being able to access resources with one or more markings, and/or having a particular permission level for accessing sensitive/secretive data.

In some examples, the groups, roles, markings, and/or permission levels are security primitives. In some examples, the desired levels of access include one or more permutations of the security primitives. In some examples, different groups can both provide access to the one or more resources, different roles can both provide access to the one or more resources, different permission levels can both provide access to the one or more resources, and/or different markings can both provide access to the one or more resources. Accordingly, in some examples, different desired levels of access may be able to provide access to the same one or more resources.

According to some embodiments, at the process 215, one or more difference are determined between the one or more desired levels of access and an existing level of access for the user. In some examples, each difference of the one or more differences is a respective difference between a desired level of access of the one or more levels of access and the existing level of access. For example, a user may currently be associated with particular security primitives. In some examples, the desired level of access can include similar and/or different security primitives to those that the user is currently associated with. In some examples, the determined difference includes differences between the security primitives currently associated with the user and the security primitives needed to access one or more resources.

According to some embodiments, at the process 220, a minimum difference from the plurality of differences is selected. In some examples, the minimum difference is the updates to security primitives currently associated with a user that will grant them new access to the fewest number of resources. In some examples, the minimum difference includes the fewest updates to security primitives currently associated with a user that will allow a user to gain access to the one or more resources. In some examples, a user may need access to additional resources than those to which they are requesting access. In such examples, updating security primitives associated with a user may grant the user access to those additional resources, based on associations between those additional resources and the updated security primitives, such that the user is granted access to the additional resources they may not have even known they needed to request access to.

According to some embodiments, at the process 225, an access request is generated. In some examples, the access request is generated based on the one or more differences calculated at process 215. In some examples, the access request is generated based on the minimum difference selected at process 220. In some examples, the access request includes a request to update the security primitives (e.g., sensitivity level, group, role, marking, etc.) associated with the user, such that the user gains access to the one or more resources.

In some examples, the access request is output for further processing. For example, a user interface can be updated based on the access request so that a reviewer can decide whether to approve the access request. In some examples, an indication of the access request is provided to a human and/or system to take further action based on the access request.

In some embodiments, method 200 may terminate at process 230. In some embodiments, method 200 may return to process 225 (or any other process from method 100) to provide an iterative loop, such as of determining one or more desired levels of access to provide a user access to one or more resources, comparing the desired levels of access to a user's current level of access, and generating an access request for the user to gain access to the one or more resources.

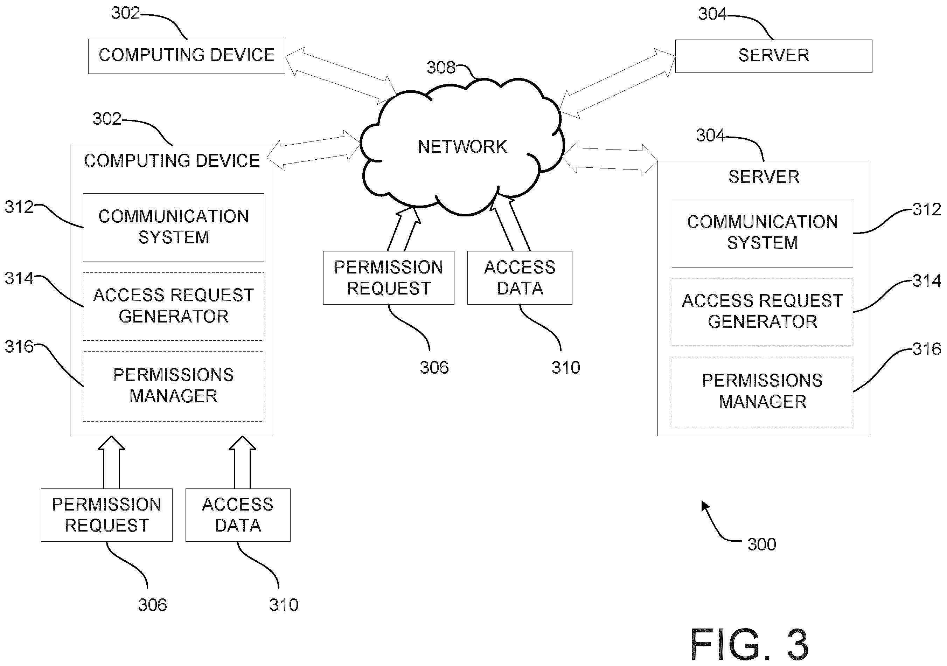

FIG. 3 shows an example of a system 300, in accordance with some aspects of the disclosed subject matter. In some embodiments, the system 300 is a system for managing access control to one or more resources. FIG. 3 is merely an example. One of the ordinary skilled in the art would recognize many variations, alternatives, and modifications. Although system 300 has been shown using a selected group of components, there can be many alternatives, modifications, and variations. For example, some of the components may be expanded and/or combined. Other components may be inserted into those noted above. Depending upon the example, the arrangement of components may be interchanged with others replaced. Further details of these components are found throughout the present disclosure.

In some embodiments, various components in the system 300 can execute software or firmware stored in non-transitory computer-readable medium to implement various processing steps. In some embodiments, various components and processors of the system 300 can be implemented by one or more computing devices including, but not limited to, circuits, a computer, a cloud-based processing unit, a processor, a processing unit, a microprocessor, a mobile computing device, and/or a tablet computer. In some embodiments, various components of the system 300 can be implemented on a shared computing device. In some embodiments, a component of the system 300 can be implemented on multiple computing devices. In some embodiments, various modules and components of the system 300 can be implemented as software, hardware, firmware, or a combination thereof.

In some embodiments, the system 300 includes one or more computing devices 302, one or more servers 304, one or more permission request sources for receiving one or more permission requests 306, a communication network or network 308, and one or more access data sources for receiving access data 310. In some embodiments, the computing device 302 can receive permission requests 306 and/or access data 310. Additionally, or alternatively, in some embodiments, the network 308 can receive permissions requests 306 and/or access data 310.

In some embodiments, computing device 302 includes a communication system 312, access request generator or component 314, and/or a permission manager 316. In some embodiments, computing device 302 can execute at least a portion of the access request generator to generate access request. For example, the access request generator can generate access requests based on the received permission request 306. In some examples, the access request generator can perform one or more processes described earlier herein with respect to method 200 of FIG. 2 for generating access requests.

In some embodiments, the computing device 302 can execute at least a portion of the permissions manager 316 to update permissions for a user to access one or more resources. For example, security primitives associated with the user can be derived from the access data 310. In some examples, the permissions manager 316 can update the security primitives associated with the user, such that the user is granted/denied access to one or more resources. In some examples, the permission manager 316 can determine what security primitives are associated with certain resources based on the access data 310. In some examples, the permissions manager can perform one or more processes described earlier herein with respect to method 100 of FIG. 1 for managing access control to one or more resources.

In some embodiments, the server 304 includes a communication system 312, access request generator or component 314, and/or a permission manager 316. In some embodiments, the server 304 can execute at least a portion of the access request generator to generate access request. For example, the access request generator can generate access requests based on the received permission request 306. In some examples, the access request generator can perform one or more processes described earlier herein with respect to method 200 of FIG. 2 for generating access requests.

In some embodiments, the server 304 can execute at least a portion of the permissions manager 316 to update permissions for a user to access one or more resources. For example, security primitives associated with the user can be derived from the access data 310. In some examples, the permissions manager 316 can update the security primitives associated with the user, such that the user is granted/denied access to one or more resources. In some examples, the permission manager 316 can determine what security primitives are associated with certain resources based on the access data 310. In some examples, the permissions manager can perform one or more processes described earlier herein with respect to method 100 of FIG. 1 for managing access control to one or more resources.

Additionally, or alternatively, in some embodiments, computing device 302 can communicate the permission request 306 and/or access data 310 to the server 304 over a communication network 308, which can execute at least a portion of the access request generator 314 and/or the permissions manager 316. In some embodiments, the access request generator 314 executes one or more portions of methods/processes disclosed herein and/or recognized by those of ordinary skill in the art, in light of the present disclosure. In some embodiments, the permissions manager 316 executes one or more portions of methods/processes disclosed herein and/or recognized by those of ordinary skill in the art, in light of the present disclosure.

In some embodiments, computing device 302 and/or server 304 can be any suitable computing device or combination of devices, such as a desktop computer, a vehicle computer, a mobile computing device (e.g., a laptop computer, a smartphone, a tablet computer, a wearable computer, etc.), a server computer, a virtual machine being executed by a physical computing device, a web server, etc. Further, in some embodiments, there may be a plurality of computing device 302 and/or a plurality of servers 304.

In some embodiments, the permission request 306 can be received from any suitable source of a permission request (e.g., data generated from a computing device, data stored in a repository, data generated from a software application, etc.) In some embodiments, the permission request 306 can be received from memory storing the permission request (e.g., local memory of computing device 302, local memory of server 304, cloud storage, portable memory connected to computing device 302, portable memory connected to server 304, etc.). In some embodiments, the permission request 306 can be received from an application configured to generate permission request and provide the permission request via a software interface. In some embodiments, the permission request 306 can be received from a source local to computing device 302. In some embodiments, the permission request 306 can be received from a source remote from computing device 302 and communicate to computing device 302 (and/or server 304) via a communication network (e.g., communication network 308).

In some embodiments, the access data 310 can be received from any suitable source of access (e.g., data generated from a computing device, data stored in a repository, data generated from a software application, etc.) In some embodiments, the access data 310 can be received from memory storing the access data (e.g., local memory of computing device 302, local memory of server 304, cloud storage, portable memory connected to computing device 302, portable memory connected to server 304, etc.). In some embodiments, the access data 310 can be received from an application configured to generate access data and provide the access data via a software interface. In some embodiments, the access data 310 can be received from a source local to computing device 302. In some embodiments, the access data 310 can be received from a source remote from computing device 302 and communicate to computing device 302 (and/or server 304) via a communication network (e.g., communication network 308).

In some embodiments, the permission request and/or access data may be received from a source that includes a repository implemented using any one of the configurations described below. In some embodiments, a data repository may include random access memories, flat files, XML files, and/or one or more database management systems (DBMS) executing on one or more database servers or a data center. In some embodiments, a database management system may be a relational (RDBMS), hierarchical (HDBMS), multidimensional (MDBMS), object oriented (ODBMS or OODBMS) or object relational (ORDBMS) database management system, and the like. In some embodiments, the data repository may be, for example, a single relational database. In some embodiments, the data repository may include a plurality of databases that can exchange and aggregate data by data integration process or software application. In some embodiments, at least part of the data repository may be hosted in a cloud data center. In some embodiments, a data repository may be hosted on a single computer, a server, a storage device, a cloud server, or the like. In some embodiments, a data repository may be hosted on a series of networked computers, servers, or devices. In some embodiments, a data repository may be hosted on tiers of data storage devices including local, regional, and central.

In some embodiments, the permission request 306 includes for what user(s) the request is being made, what role is being request for the user(s), what role is being requested for the user(s), what marking are requested to be associated with the user(s), how long in duration the user is request to have access, what security level is requested to be associated with the user, what justification is provided for the request to be granted, context associated with the request, supporting documents for the request to be approved, and/or what resources are requested access to. Additional and/or alternative data that the permission request 306 include should be recognized by those of ordinary skill in the art.

In some embodiments, the access data 310 includes what security primitives are associated with one or more resources. In some embodiments, the access data 310 includes what security primitives are associated with one or more users. In some examples, the security primitives include roles (e.g., editor, owner, viewer), groups (e.g., Group A, Group B, Group C), markings (e.g., attorney-client privileged, personal identifiable information, health data, etc.), and/or security level (e.g., high, medium, low). Additional and/or alternative security primitives should be recognized by those of ordinary skill in the art.

In some embodiments, communication network 308 can be any suitable communication network or combination of communication networks. For example, communication network 308 can include a Wi-Fi network (which can include one or more wireless routers, one or more switches, etc.), a peer-to-peer network (e.g., a Bluetooth network), a cellular network (e.g., a 3G network, a 4G network, a 5G network, etc., complying with any suitable standard), a wired network, etc. In some embodiments, communication network 308 can be a local area network (LAN), interfaces conforming known communications standard, such as Bluetooth^{®} standard, IEEE 802 standards (e.g., IEEE 802.11), a ZigBee^{®} or similar specification, such as those based on the IEEE 802.15.4 standard, a wide area network (WAN), a public network (e.g., the Internet), a private or semi-private network (e.g., a corporate or university intranet), any other suitable type of network, or any suitable combination of networks. In some embodiments, communication links (arrows) shown in FIG. 3 can each be any suitable communications link or combination of communication links, such as wired links, fiber optics links, Wi-Fi links, Bluetooth^{®} links, cellular links, satellite links, etc.

FIG. 4 illustrates an example graphical user interface (GUI) 400, according to certain embodiments of the present disclosure. FIG. 4 is merely an example. One of the ordinary skilled in the art would recognize many variations, alternatives, and modifications. Although GUI 400 has been shown using a selected group of components, there can be many alternatives, modifications, and variations. For example, some of the components may be expanded and/or combined. Other components may be inserted and/or certain components may be removed. Further details of these components can be found throughout the present disclosure.

In some examples, a user may be working on a computer (e.g., computing device 302 of FIG. 3) and come across a resource that they do not have permission to access. For example, there can be data in the resource with a marking that the user does not have permission to access (e.g., privileged, PII, etc.). As an example, the user may not be part of a certain group and/or have a certain role to access the resource. In some examples, the GUI 400 is generated to inform the user that they do not have permission to access the resource. In some examples, the GUI 400 includes a message 402 and/or an icon 404 displayed via the GUI 400. In some examples, the GUI 400 is displayed via a display of a computing device (such as the display 1306 of system 1300 described later herein). In some examples, the message 402 and/or icon 404 inform the user that they do not have permission to access the resource.

In some examples, the GUI 400 includes a user input feature 406. In some examples, the input feature 406 include a text box, a file upload, selection options, and/or a button. In the illustrated example of FIG. 4, the input feature 406 is a button 406. In some examples, the user can request access to the resource via the GUI. For example, the user can request access to the resource via the input feature 406. In some examples, a user can request permission for themself to access a resource. In some examples, someone else can request permission for the user to access the resource.

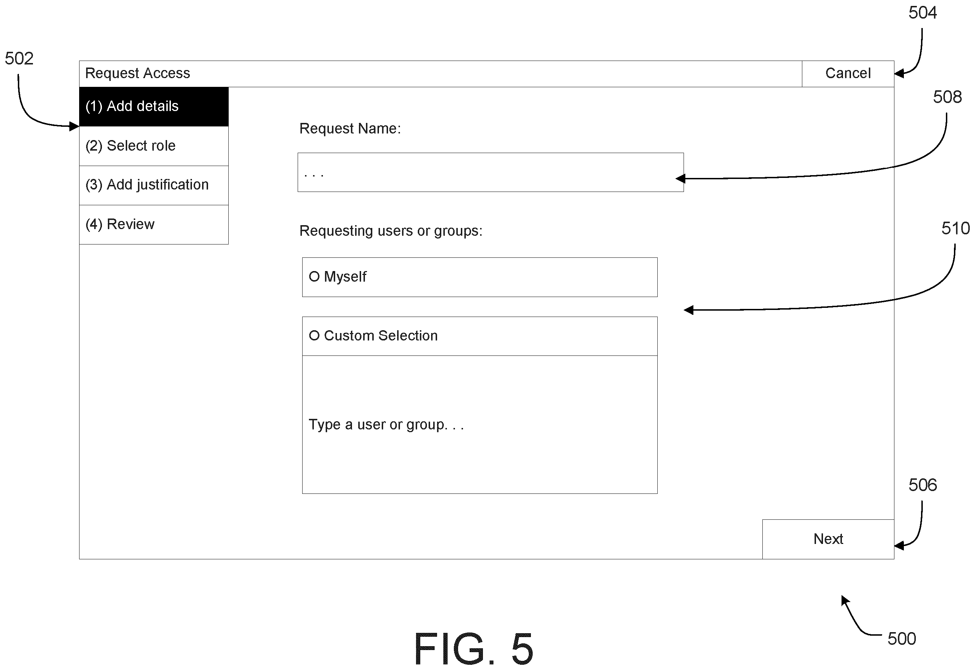

FIG. 5 illustrates an example GUI 500, according to certain embodiments of the present disclosure. FIG. 5 is merely an example. One of the ordinary skilled in the art would recognize many variations, alternatives, and modifications. Although GUI 500 has been shown using a selected group of components, there can be many alternatives, modifications, and variations. For example, some of the components may be expanded and/or combined. Other components may be inserted and/or certain components may be removed. Further details of these components can be found throughout the present disclosure.

In some examples, GUI 500 is generated and/or displayed in response to input received via the input feature 406 of GUI 400. In some examples, the GUI 500 is otherwise generated and/or displayed. In some examples GUI 500 walks a requester (e.g., user, administrator, etc.) through steps to generate a permission request to access one or more resources. In some examples, the GUI 500 includes a step tracker 502 to indicate what step the requester is on for generating a permission request. In some examples, the GUI 500 includes a cancel feature (e.g., button) 504 to allow a requester to archive, cancel, or discontinue their generating of a permission request. In some examples, the GUI 500 includes a next feature (e.g., button) 506 to allow a requester to move to a subsequent step for generating a permission request.

In some examples, GUI 500 includes a plurality of input features, such as a first input feature 508 and a second input feature 510. In some examples, the first input feature 508 prompts a requester to input a name for their request. In some examples, the second input feature 510 prompts a requester to specify whether they are generating a request on behalf of themselves or on behalf of one or more other users. In some examples, the first and second input features 508, 510 include a text box, a file upload, a selection option, and/or a button.

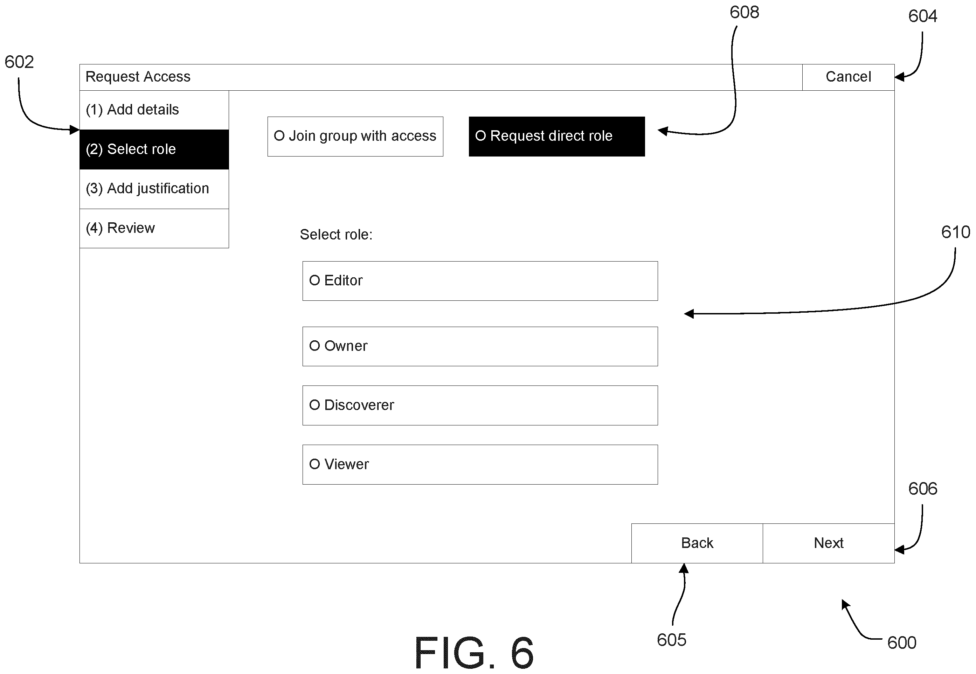

FIG. 6 illustrates an example GUI 600, according to certain embodiments of the present disclosure. FIG. 6 is merely an example. One of the ordinary skilled in the art would recognize many variations, alternatives, and modifications. Although GUI 600 has been shown using a selected group of components, there can be many alternatives, modifications, and variations. For example, some of the components may be expanded and/or combined. Other components may be inserted and/or certain components may be removed. Further details of these components can be found throughout the present disclosure.

In some examples, GUI 600 is generated and/or displayed in response to input received via the next feature 506 of GUI 500. In some examples, the GUI 600 is otherwise generated and/or displayed. In some examples GUI 600 walks a requester (e.g., user, administrator, etc.) through steps to generate a permission request to access one or more resources. In some examples, the GUI 600 includes a step tracker 502 to indicate what step a requester is on for generating a permission request. In some examples, the GUI 600 includes a cancel feature (e.g., button) 604 to allow a requester to archive, cancel, or discontinue their generating of a permission request. In some examples, the GUI 600 includes a back feature (e.g., button) 605 to allow a requester to return to a previous step for generating a permission request (e.g., the step associated with GUI 500). In some examples, the GUI 600 includes a next feature (e.g., button) 606 to allow a requester to move to a subsequent step for generating a permission request.

In some examples, GUI 600 includes a plurality of input features, such as a first input feature 608 and a second input feature 610. In some examples, the first input feature 608 prompts a requester to input whether they are requesting (for themselves and/or one or more other users) to join a certain group and/or whether they are requesting to have a certain role. In some examples, the first input feature 608 then receives input for whether the requester is requesting (for themselves and/or one or more other users) to join a certain group and/or to have a certain role. In some examples, the second input feature 610 prompts a requester to specify what role they are requesting (e.g., editor, owner, discoverer, viewer). In some examples, the second input feature 610 prompts a requester to specify what group they are requesting to join. In some examples, the second input feature 610 receives input for what role and/or group is being requested. In some examples, the first and second input features 608, 610 include a text box, a file upload, a selection option, and/or a button.

In some examples, the GUI 600 includes an indication of what groups and/or markings the user(s) for whom the request is being generated should be granted access to, such as based on what resource the user is attempting to access and/or security primitives associated with the user that are known and/or can be determined by systems provided herein.

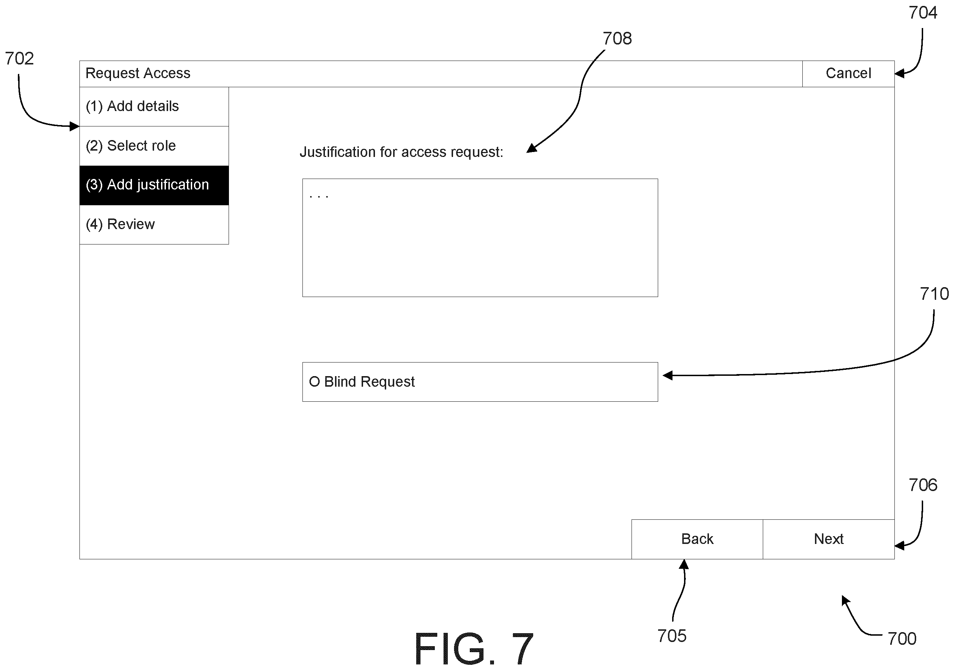

FIG. 7 illustrates an example GUI 700, according to certain embodiments of the present disclosure. FIG. 7 is merely an example. One of the ordinary skilled in the art would recognize many variations, alternatives, and modifications. Although GUI 700 has been shown using a selected group of components, there can be many alternatives, modifications, and variations. For example, some of the components may be expanded and/or combined. Other components may be inserted and/or certain components may be removed. Further details of these components can be found throughout the present disclosure.

In some examples, GUI 700 is generated and/or displayed in response to input received via the next feature 606 of GUI 600. In some examples, the GUI 700 is otherwise generated and/or displayed. In some examples GUI 700 walks a requester (e.g., user, administrator, etc.) through steps to generate a permission request to access one or more resources. In some examples, the GUI 700 includes a step tracker 702 to indicate what step a requester is on for generating a permission request. In some examples, the GUI 700 includes a cancel feature (e.g., button) 704 to allow a requester to archive, cancel, or discontinue their generating of a permission request. In some examples, the GUI 700 includes a back feature (e.g., button) 705 to allow a requester to return to a previous step for generating a permission request (e.g., the step associated with GUI 600). In some examples, the GUI 700 includes a next feature (e.g., button) 706 to allow a requester to move to a subsequent step for generating a permission request.

In some examples, GUI 700 includes a plurality of input features, such as a first input feature 708 and a second input feature 710. In some examples, the first input feature 708 prompts a requester to input a justification for why they are requesting access to one or more resources (for themselves, or on behalf of one or more other users). In some examples, the first input feature 708 receives input for the justification. In some examples, the second input feature 710 prompts a requester to specify whether the request is a blind request. In some examples, the second input feature 610 receives input for whether the request is a blind request. In some examples, input is received via only one of the first input feature 708 or the second input feature 710. In some examples, the first input feature 608 and/or the second input feature 610 includes a text box, a file upload, a selection option, and/or a button.

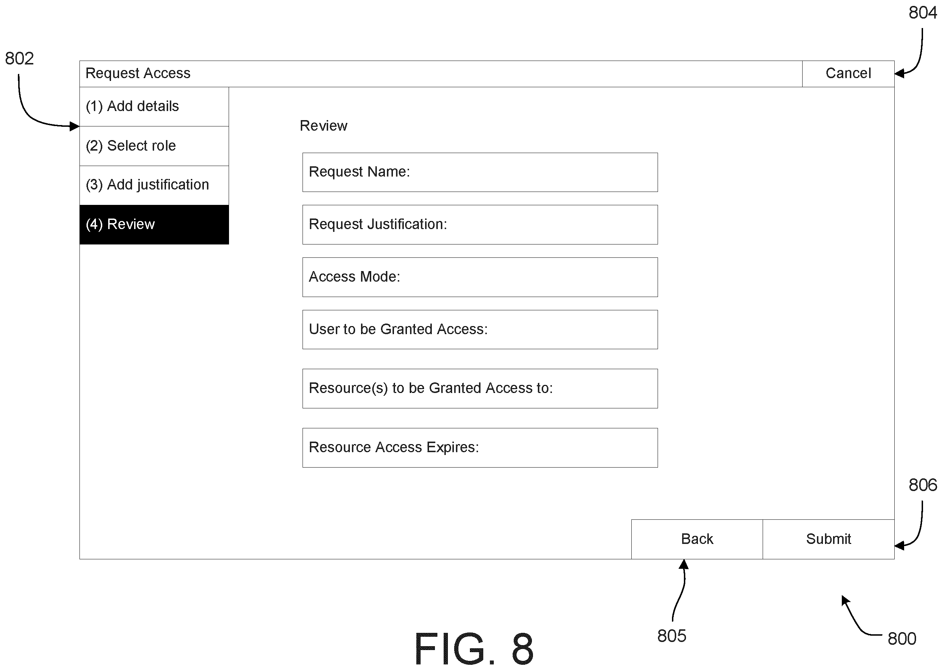

FIG. 8 illustrates an example GUI 800, according to certain embodiments of the present disclosure. FIG. 8 is merely an example. One of the ordinary skilled in the art would recognize many variations, alternatives, and modifications. Although GUI 800 has been shown using a selected group of components, there can be many alternatives, modifications, and variations. For example, some of the components may be expanded and/or combined. Other components may be inserted and/or certain components may be removed. Further details of these components can be found throughout the present disclosure.

In some examples, GUI 800 is generated and/or displayed in response to input received via the next feature 706 of GUI 700. In some examples, the GUI 800 is otherwise generated and/or displayed. In some examples GUI 800 walks a requester (e.g., user, administrator, etc.) through steps to generate a permission request to access one or more resources. In some examples, the GUI 800 includes a step tracker 802 to indicate what step a requester is on for generating a permission request. In some examples, the GUI 800 includes a cancel feature (e.g., button) 804 to allow a requester to archive, cancel, or discontinue their generating of a permission request. In some examples, the GUI 800 includes a back feature (e.g., button) 805 to allow a requester to return to a previous step for generating a permission request (e.g., the step associated with GUI 700). In some examples, the GUI 800 includes a submit feature (e.g., button) 806 to allow a requester to generate a permission request.

In some examples, the GUI 800 includes a review of information that a requester provided to generate the permission request. In some examples, the GUI 800 includes a review of information that was provided by a system to generate the permission request. For example, the review can include the request name (e.g., from GUI 500), the request justification (e.g., from GUI 700), the access mode (e.g., how a user tried or plans to access the resource, as specified by the user or determined by a system), which user(s) is/are to be granted access, what resource(s) the user(s) is/are to be granted access to, and/or when the resource access will expire (e.g., as requested by the user, determined by a system, and/or configured by an admin).

In some examples, in response to providing input indicative of submitting the permission request, such as via the submit feature 806, an indication of the permission request is provided to a reviewer for approval.

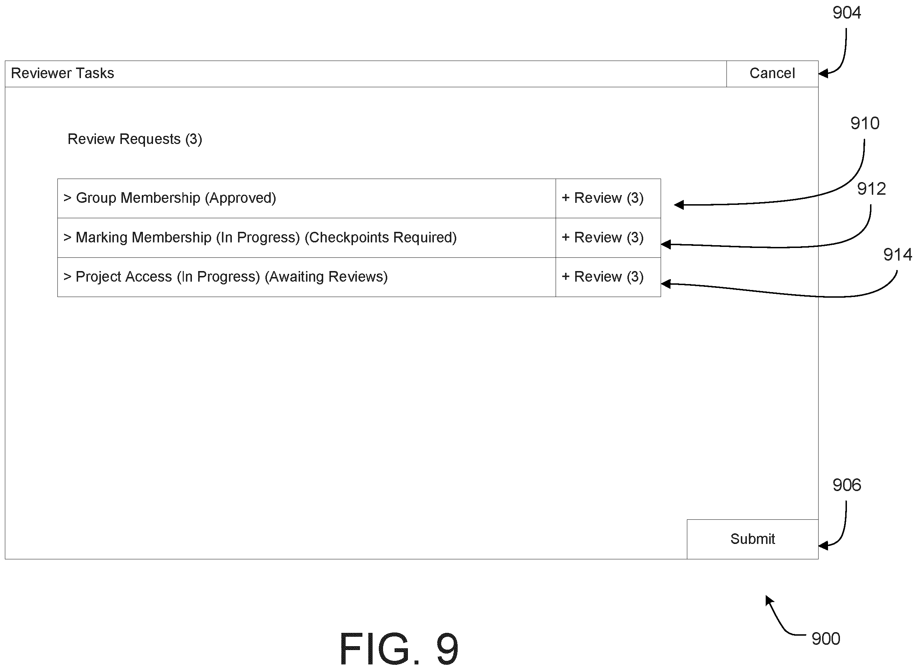

FIG. 9 illustrates an example GUI 900, according to certain embodiments of the present disclosure. FIG. 9 is merely an example. One of the ordinary skilled in the art would recognize many variations, alternatives, and modifications. Although GUI 900 has been shown using a selected group of components, there can be many alternatives, modifications, and variations. For example, some of the components may be expanded and/or combined. Other components may be inserted and/or certain components may be removed. Further details of these components can be found throughout the present disclosure.

In some examples, GUI 900 provides a display for tracking the permission requests of one or more requesters. For example, the illustrated GUI 900 indicates that three requests are pending review. In some examples, the GUI 900 includes a cancel feature (e.g., button) 904 to allow a user to archive, cancel, or discontinue their review of the status of permission requests. In some examples, the GUI 900 includes a submit feature (e.g., button) 906 to allow a user to submit edits to, approvals of, and/or rejections of requests.

In some examples, the GUI 900 is viewable by a requester. In some examples, the GUI 900 is viewable by a reviewer. In some examples, the GUI 900 includes a plurality of sets of status updates, such as a first set of status updates 910, a second set of status updates 912, and a third set of status updates 914. In some examples, the first set of status updates 910 correspond to the status of group membership requests. In some examples, the second set of status updates 912 correspond to the status of marking membership requests. In some examples, the third set of status updates 914 correspond to the status of project access requests. In some examples, the set of status updates 910, 912, 914 include an indication of whether the corresponding requests have been approved, are in progress, are awaiting review, are awaiting one or more checkpoints, and/or other types of status updates that may be recognized by those of ordinary skill in the art.

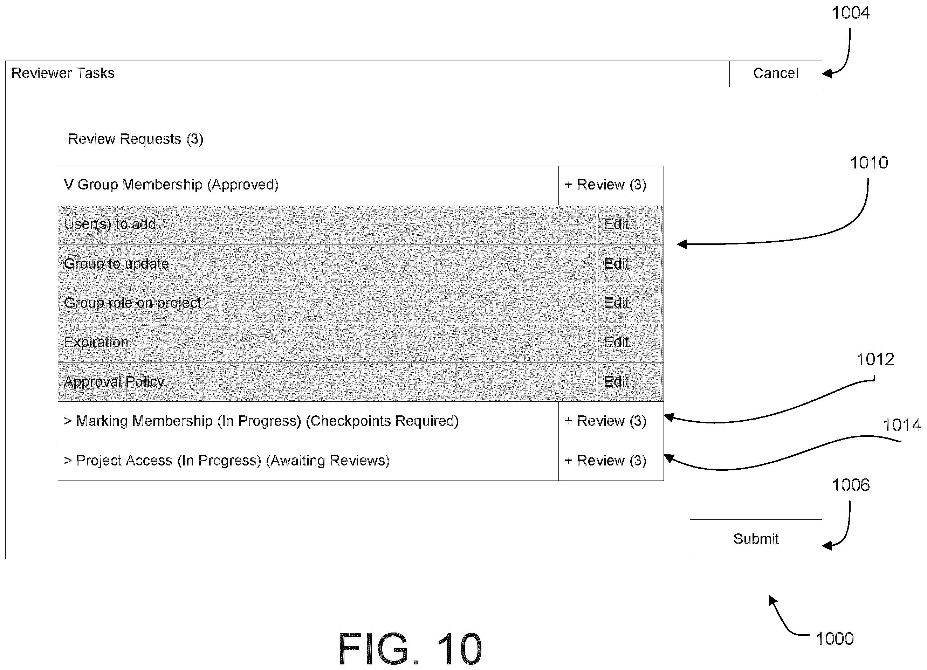

FIG. 10 illustrates an example GUI 1000, according to certain embodiments of the present disclosure. FIG. 10 is merely an example. One of the ordinary skilled in the art would recognize many variations, alternatives, and modifications. Although GUI 1000 has been shown using a selected group of components, there can be many alternatives, modifications, and variations. For example, some of the components may be expanded and/or combined. Other components may be inserted and/or certain components may be removed. Further details of these components can be found throughout the present disclosure.

In some examples, GUI 1000 provides a display for tracking the permission requests of one or more requesters. For example, the illustrated GUI 1000 indicates that three requests are pending review. In some examples, GUI 1000 is an alternative configuration of the GUI 900. In some examples, the GUI 1000 includes a cancel feature (e.g., button) 1004 to allow a user to archive, cancel, or discontinue their review of the status of permission requests. In some examples, the GUI 1000 includes a submit feature (e.g., button) 1006 to allow a user to submit edits to, approvals of, and/or rejections of requests.

In some examples, the GUI 1000 is viewable by a requester. In some examples, the GUI 1000 is viewable by a reviewer. In some examples, the GUI 1000 includes a plurality of sets of status updates, such as a first set of status updates 1010, a second set of status updates 1012, and a third set of status updates 1014. In some examples, the first set of status updates 1010 correspond to the status of group membership requests. In some examples, the second set of status updates 1012 correspond to the status of marking membership requests. In some examples, the third set of status updates 1014 correspond to the status of project access requests. In some examples, the set of status updates 1010, 1012, 1014 include an indication of whether the corresponding requests have been approved, are in progress, are awaiting review, are awaiting one or more checkpoints, and/or other types of status updates that may be recognized by those of ordinary skill in the art.

In some examples, the first set of status updates 1010 is expandable to allow a user to review specific aspects of the group membership requests corresponding to the first set of status updates 1010. In some examples, the specific aspects of the group membership requests include user(s) to add, group to update, group role on project, expiration of access, and/or an approval policy to grant a request. Additional and/or alternative aspects of the group membership requests should be recognized by those of ordinary skill in the art. In some examples, the aspects of the group membership requests can be edited, approved, and/or denied. In some examples, the edits, approval, and/or denials can be saved by providing input to the submit feature 1006 (e.g., clicking a submit button).

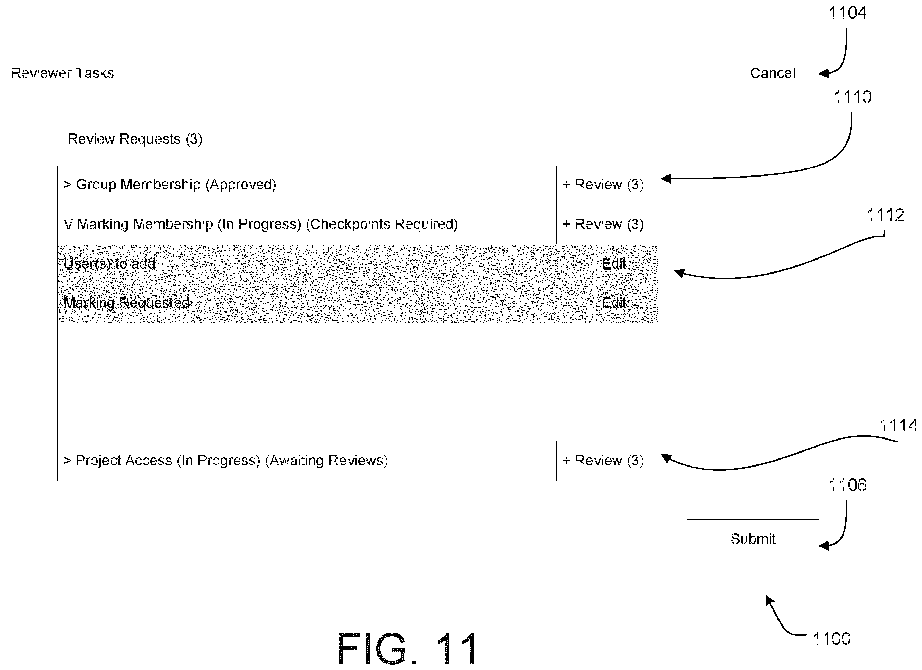

FIG. 11 illustrates an example GUI 1100, according to certain embodiments of the present disclosure. FIG. 11 is merely an example. One of the ordinary skilled in the art would recognize many variations, alternatives, and modifications. Although GUI 1100 has been shown using a selected group of components, there can be many alternatives, modifications, and variations. For example, some of the components may be expanded and/or combined. Other components may be inserted and/or certain components may be removed. Further details of these components can be found throughout the present disclosure.

In some examples, GUI 1100 provides a display for tracking the permission requests of one or more requesters. For example, the illustrated GUI 1100 indicates that three requests are pending review. In some examples, GUI 1100 is an alternative configuration of the GUI 900 and/or the GUI 1000. In some examples, the GUI 1100 includes a cancel feature (e.g., button) 1104 to allow a user to archive, cancel, or discontinue their review of the status of permission requests. In some examples, the GUI 1100 includes a submit feature (e.g., button) 1106 to allow a user to submit edits to, approvals of, and/or rejections of requests.

In some examples, the GUI 1100 is viewable by a requester. In some examples, the GUI 1100 is viewable by a reviewer. In some examples, the GUI 1100 includes a plurality of sets of status updates, such as a first set of status updates 1110, a second set of status updates 1112, and a third set of status updates 1114. In some examples, the first set of status updates 1110 correspond to the status of group membership requests. In some examples, the second set of status updates 1112 correspond to the status of marking membership requests. In some examples, the third set of status updates 1114 correspond to the status of project access requests. In some examples, the set of status updates 1110, 1112, 1114 include an indication of whether the corresponding requests have been approved, are in progress, are awaiting review, are awaiting one or more checkpoints, and/or other types of status updates that may be recognized by those of ordinary skill in the art.

In some examples, the second set of status updates 1112 is expandable to allow a user to review specific aspects of the marking membership requests corresponding to the second set of status updates 1112. In some examples, the specific aspects of the marking membership requests include user(s) to add and/or markings requested. Additional and/or alternative aspects of the marking membership requests should be recognized by those of ordinary skill in the art. In some examples, the aspects of the marking membership requests can be edited, approved, and/or denied. In some examples, the edits, approval, and/or denials can be saved by providing input to the submit feature 1106 (e.g., clicking a submit button).

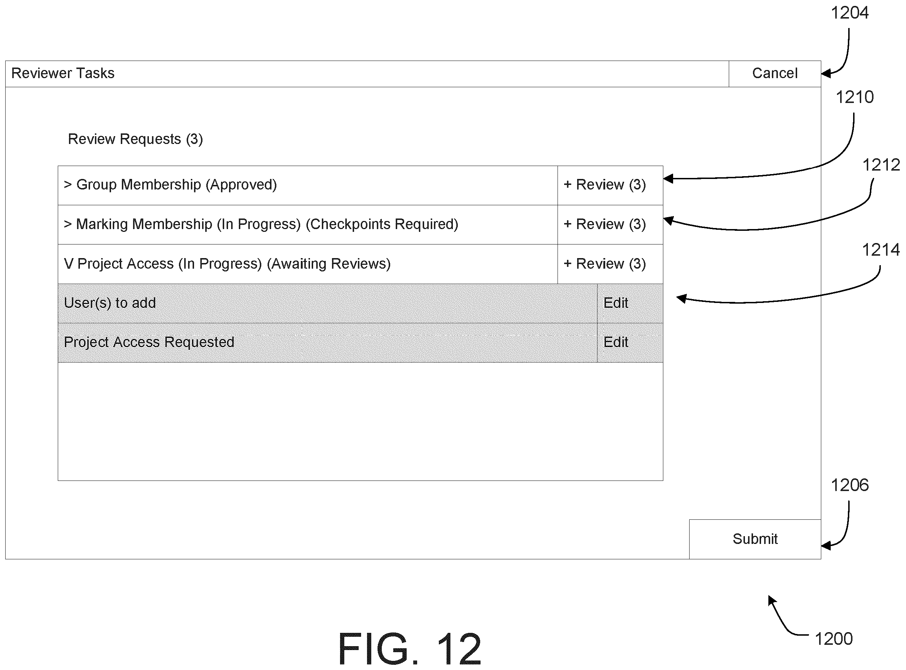

FIG. 12 illustrates an example GUI 1200, according to certain embodiments of the present disclosure. FIG. 12 is merely an example. One of the ordinary skilled in the art would recognize many variations, alternatives, and modifications. Although GUI 1200 has been shown using a selected group of components, there can be many alternatives, modifications, and variations. For example, some of the components may be expanded and/or combined. Other components may be inserted and/or certain components may be removed. Further details of these components can be found throughout the present disclosure.

In some examples, GUI 1200 provides a display for tracking the permission requests of one or more requesters. For example, the illustrated GUI 1200 indicates that three requests are pending review. In some examples, GUI 1200 is an alternative configuration of the GUI 900, GUI 1000, and/or the GUI 1100. In some examples, the GUI 1200 includes a cancel feature (e.g., button) 1204 to allow a user to archive, cancel, or discontinue their review of the status of permission requests. In some examples, the GUI 1200 includes a submit feature (e.g., button) 1206 to allow a user to submit edits to, approvals of, and/or rejections of requests.

In some examples, the GUI 1200 is viewable by a requester. In some examples, the GUI 1200 is viewable by a reviewer. In some examples, the GUI 1200 includes a plurality of sets of status updates, such as a first set of status updates 1210, a second set of status updates 1212, and a third set of status updates 1214. In some examples, the first set of status updates 1210 correspond to the status of group membership requests. In some examples, the second set of status updates 1212 correspond to the status of marking membership requests. In some examples, the third set of status updates 1214 correspond to the status of project access requests. In some examples, the set of status updates 1210, 1212, 1214 include an indication of whether the corresponding requests have been approved, are in progress, are awaiting review, are awaiting one or more checkpoints, and/or other types of status updates that may be recognized by those of ordinary skill in the art.

In some examples, the third set of status updates 1212 is expandable to allow a user to review specific aspects of the project access requests corresponding to the third set of status updates 1212. In some examples, the specific aspects of the project access requests include user(s) to add and/or project access requested (e.g., which projects are requested access to). Additional and/or alternative aspects of the project access requests should be recognized by those of ordinary skill in the art. In some examples, the aspects of the project access requests can be edited, approved, and/or denied. In some examples, the edits, approval, and/or denials can be saved by providing input to the submit feature 1206 (e.g., clicking a submit button).

In some examples, techniques provided herein can further incorporate time-based access to one or more resources. In some examples, mechanisms provided herein may be used for relatively complex security system with a plurality of discretionary controls. In some examples, an owner of a resource can grant discretionary controls. In some examples, a user for whom access is being requested needs to satisfy some mandatory controls. In some examples, controls for accessing one or more resources are centrally managed. In some examples, access control may be implemented for a resource, such as because the resource contains personal identifiable information (PII) and/or the project is labelled as secret. In some examples, not all members of a project can manage permissions to access one or more resources associated with the project. In some examples, users do not understand what it is that they need to have access to, to get access to data for a project. In some examples, a user comes across a page where they cannot see data that they want to access. In some examples, a user may encounter a permission error for being unable to access a resource. In some examples, mechanisms provided herein can determine what permissions a user needs to access a resource, and then allow for a user to submit a permission request to access the resource.

In some examples, techniques provided herein can compute what permissions are needed, in a relatively complex security system with various levels of permissions, to grant a user access to a resource. In some examples, a request can include a request to assume a certain role related to the resource to which access is requested. For example, the role can be a viewer role, owner role, manager role, etc. In some examples, a request can include what groups a user wants to access. In some examples, a user's access is time-based access, such that the user is granted a certain amount of time to access a resource.

In some examples, techniques provided herein determine what access being added to a group grants a user. For example, if a user requests access to an owner group, the owner group may automatically give the user access to controls associated with the resource. In some examples, techniques provided herein compute a minimal set of permissions that a user needs to access the resources they want to access. For example, if being added to a group will give the user access to certain controls, then the user does not also need to ask for direct access to the certain controls because it will come with being granted access to the group.

In some examples, requests are routed to the people that can grant the requested access. For example, if a user is requesting access to a viewer's group for a project, then a system may notify the administrator of the viewer's group that the user is requesting access. In some examples, the request and/or notification may also provide an indication for why the user wants and/or should be granted access to the group. In some examples, if the administrator approves the request, then access to the viewer's groups (and associated permissions) will be automatically granted. In some examples, being notified of a request, reviewing the request, and granting the request, are all integrated into a single platform, such as a user-interface, to streamline the process of managing access controls for one or more users.

In some examples, a user may not know or even be able to discover any metadata about a resource. For example, the resource may be protected by controls. In some examples, a user (or someone on behalf of the user) can submit an access request without disclosing any information about whether a resource exists or what things the user would need to receive access to for accessing the resource. In some examples, the reviewer of the request can see the request and the things that granting the request will give the user access to. In such examples, the reviewer can then make a decision based on what the user will be granted access to, as to whether the request should be granted or denied. In some examples, such a request is called a blind request. In some examples, a blind request is a request made when a user has no information about what it is they are requesting access to, other than the mechanism (e.g., link) by which they are requesting access to the resource. In some examples, a blind request is when a user has minimal information related to the resource they are requesting access to.

In some examples, a requester can provide justification for why a user should be granted access to a resource. In some examples, techniques provided herein include auditing workflows for tracking when, by whom, and why requests were granted. For example, justification for why a user was granted access to a resource can be captured and stored.

In some examples, administrators can configure requirements for filling-out or granting a request, such as specific prompts for why a user needs particular access, or require requesters/approved to acknowledge certain pieces of information, or upload compliance forms, etc. In some examples, if someone wants to see why a person has access to a resource, they can go and review checkpoints of access being granted to the resource and when a user was added, what the justification was, who approved the user being added, etc.

In some examples, mechanisms provided herein generate an access request. In some examples, the access request is generated by compute a difference between existing access for a user and access that the user is requesting. In some examples, the computing of a difference minimizes what permissions are requested for a user to gain access to a particular resource. For example, techniques provided herein minimize redundant and/or overly broad requests to give specific tailored and minimized access for a user that capture the difference between a user's current permissions and desired permissions to access a particular resource.

In some examples, a project or other resource owner may have control over what role people are given when granted access to the project or other resource. For example, the resource owner can limit roles that a requester can request to a view-only role, as opposed to being able to request an editor and/or owner role. However, other examples should be recognized by those of ordinary skill in the art.

In some examples, security systems have levels of access to control access to one or more resources. In some examples, to access a particular resource can require a plurality of granted accesses. In some examples, the requested access is not an access level on a hierarchy of access levels, but instead a granular access amongst a set of accesses, to gain permission to access a resource.

In some examples, roles that a requester can request or that a user can be assigned related to a particular resource include a viewer, an editor, and/or an owner. In some examples, custom roles can also be created. For example, a custom role can include a viewer that cannot download any data.

In some examples, techniques provided herein provide a centralized platform for receiving, notifying, and tracking checkpoints for requests. In some examples, the platform can automatically update permissions for a user based on the checkpoints for a request related to the user being approved. Conventional systems may require reviewers to manually update each permission for a user when they approve requests. However, examples provided herein allow for permissions to be automatically determined and updated to grant user access to a resource to which they are requesting access.

In some examples, two primitives include a role on a project or resource and markings on the project or resource. In some examples, the primitives are fixed variables that a user satisfies to gain access to data associated with the resource. In some examples, a user can be granted access to a group that provides them with a role that they request. In some examples, a user can request to directly be granted a particular role. In some examples, a user can directly request to access resources with a particular marking. In some examples, a user can be granted access to a group that provides them with access to resources with particular markings. In some examples, the roles and/or markings are represented as bits in metadata associated with users and/or resources.

In some examples, there are a plurality of ways that markings can be used. In some examples, all PII, or sensitive, or privileged information may be marked with a particular marking. In some examples, certain compliance training may be required before a user can be granted access to resources with particular markings. In some examples, any resources with data derived from a resource with a certain marking may be given the certain marking as well. For example, if a dataset is generated using PII from a resource, then the dataset can be marked as containing PII. In some examples, markings will be automatically propagated to derivatives of resources containing the markings. In some examples, users can be required to have particular roles (e.g., an attorney) to access certain resources with certain markings (e.g., privileged data).

In some examples, a user may not be allowed to even request access to a resource if they do not fulfill certain requirements associated with a resource. For example, if a system knows that the user has not fulfilled certain training requirements, then the user may not be allowed to request access to resources that require the training requirements to be fulfilled. In some examples, if a resource is associated with a particular role and marking, then if the user requests access to the role, then the system may automatically request that the user gain access to the associated role and marking. In some examples, without gaining access to the role and marking, the user would be unable to access the resource, therefore mechanisms provided herein help to streamline the process of making requests to access a resource by determining all of the permissions that should be altered to grant the user access.

In some examples, a user can make a blind request to access a resource. In some examples, a blind request occurs when a user clicks on a link to access a resource without knowing what is the resource. In some examples, by clicking on the link, a request is generated for the user to gain access to the resource. In some examples, the link may be provided via onboarding documents for a particular team and/or project. In some examples, a user can provide context of where they received the link to access the resource, but the user may not have any information about what is the resource. In some examples, the user may be approved to access the resource based on a reviewer knowing that the user should have access to the project and/or based on the provided context (e.g., the user joining a particular team and/or project).

In some examples, multiple reviewers are needed to approve a request for a user to access one or more resources. In some examples, it is a single-step process for a reviewer to approve a request for a user to access one or more resources. For example, the reviewer may approve the request via input for a user-interface.

In some examples, resources have metadata associated with particular groups, roles, security levels, and/or markings. In some examples, the granular metadata of the resources allows for the implementation of sophisticated access control management techniques provided herein. In some examples, the difference between a user's current access level and requested access level is computed based on one or more groups, roles, security levels, and/or marking associated with the requested access level (e.g., a level of access for a user to access a particular resource).

Conventional systems may have much simpler access control techniques than the improved techniques provided herein. For example, conventional systems may just include tiered security levels (e.g., high security, medium security, low security). Comparatively, in some examples according to aspects provided herein, access control can be based on a plurality of more granular permissions associated with resources (e.g., groups, roles, security level, markings, etc.).

In some examples, a user may be working on a computer and come across a resource that they do not have permission to access. For example, there can be data in the resource with a marking that the user does not have permission to access (e.g., privileged, PII, etc.). In some examples, an error message may be generated and displayed to the user via a user-interface (e.g., a graphical user-interface). In some examples, the user can request access to the resource via the user-interface on which the message is displayed. In some examples, a user can request permission for themself to access a resource. In some examples, someone else can request permission for the user to access the resource. In some examples, the request includes who should be granted access to the resource. In some examples, the request includes what role the user should be granted (e.g., owner, editor, viewer, etc.). In some examples, the request includes an indication of what groups and/or markings the user should be granted access. In some examples, the request includes for how long the user should be granted access. In some examples, the request includes an indication of why the user should have the requested access. In some examples, the request includes an indication of compliance, training, or other requirements that may need to be met by the user to be granted access to the resource. In some examples, the user interface provides an indication of the request being submitted, once the request is submitted.

In some examples, an indication of the request is provided to a reviewer of the request. In some examples, the indication of the request is provided via a user interface, such as a graphical user interface. In some examples, the user interface displays what access the reviewer would be granted to a user, by approving the request. In some examples, the reviewer can provide input to the user interface to approve or deny the request. In some examples, the reviewer can approve part of the request, but not the entire request. In some examples, the user can provide an notice to the requester that further actions should be taken (e.g., uploading proof of training, getting additional approval, providing justification for the request, etc.).

In some examples, once all approval requirements are met, the various permissions that a user needs to access the requested resource may be determined. In some examples, the various permissions may be automatically updated to provide the user with access to the resource. In some examples, a user's access can be edited after it was previously granted. For example, a reviewer can remove a user from being associated with one or more groups, markings, roles, etc. In some examples, a user may be notified when their request is approved, denied, and/or edited. In some examples, the notification to the user may include a message or other indication of why the request was approved, denied, and/or edited.

In some examples, an owner is a role that can approve requests to access a resource (e.g., a project). In some examples, the resource is one or more files, or a repository, or a database. In some examples, the owner can apply markings to the resource. In some examples, the owner has an administrative role with respect to the resource. In some examples, an editor is a role that can edit a resource. In some examples, the editor can upload and/or remove data to/from a resource.

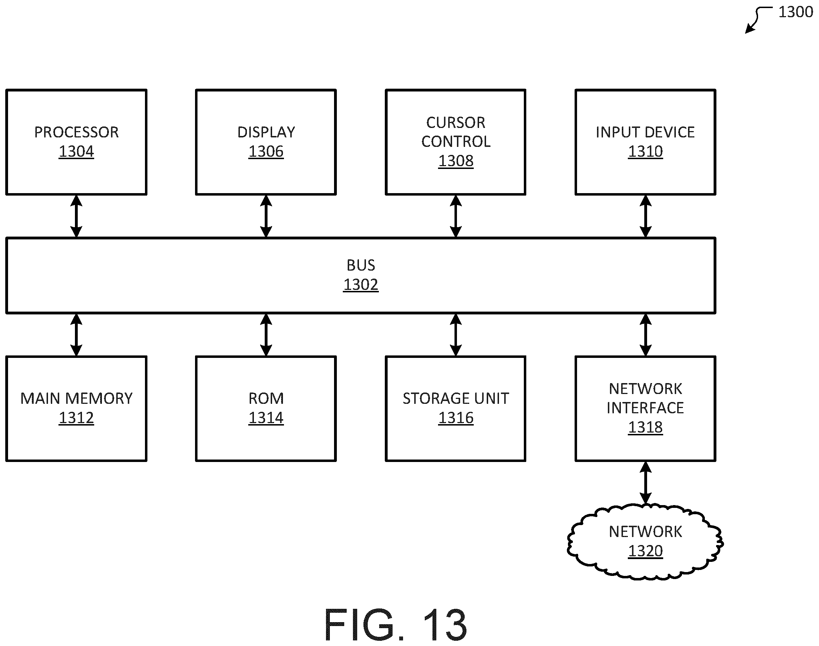

FIG. 13 is a simplified diagram showing a computing system for implementing a system 1300 for managing access control to one or more resources in accordance with at least one example set forth in the disclosure. This diagram is merely an example, which should not unduly limit the scope of the claims. One of ordinary skill in the art would recognize many variations, alternatives, and modifications.

The computing system 1300 includes a bus 1302 or other communication mechanism for communicating information, a processor 1304, a display 1306, a cursor control component 1308, an input device 1310, a main memory 1312, a read only memory (ROM) 1314, a storage unit 1316, and a network interface 1318. In some embodiments, some or all processes (e.g., steps) of methods and/or processes disclosed herein are performed by the computing system 1300. In some embodiments, the bus 1302 is coupled to the processor 1304, the display 1306, the cursor control component 1308, the input device 1310, the main memory 1312, the read only memory (ROM) 1314, the storage unit 1316, and/or the network interface 1318. In certain embodiments, the network interface is coupled to a network 1320. For example, the processor 1304 includes one or more general purpose microprocessors. In some embodiments, the main memory 1312 (e.g., random access memory (RAM), cache and/or other dynamic storage devices) is configured to store information and instructions to be executed by the processor 1304. In certain embodiments, the main memory 1312 is configured to store temporary variables or other intermediate information during execution of instructions to be executed by processor 1304. For example, the instructions, when stored in the storage unit 1316 accessible to processor 1304, render the computing system 1300 into a special-purpose machine that is customized to perform the operations specified in the instructions. In some embodiments, the ROM 1314 is configured to store static information and instructions for the processor 1304. In certain embodiments, the storage unit 1316 (e.g., a magnetic disk, optical disk, or flash drive) is configured to store information and instructions.

In some embodiments, the display 1306 (e.g., a cathode ray tube (CRT), an LCD display, or a touch screen) is configured to display information to a user of the computing system 1300. In some embodiments, the input device 1310 (e.g., alphanumeric and other keys) is configured to communicate information and commands to the processor 1304. For example, the cursor control component 1308 (e.g., a mouse, a trackball, or cursor direction keys) is configured to communicate additional information and commands (e.g., to control cursor movements on the display 1306) to the processor 1304.

According to certain embodiments, a method for managing access control to one or more resources is provided. In some examples, the method includes receiving a permission request for a user to access the one or more resources, generating an access request based at least in part on the permission request, notifying one or more reviewers to review the access request, receiving an indication of the access request being approved, and automatically granting permission to the user to access the one or more resources. The method is performed using one or more processors. For example, the method is implemented according to at least FIG. 1, FIG. 2, FIG. 3, FIG. 4, FIG. 5, FIG. 6, FIG. 7, FIG. 8, FIG. 9, FIG. 10, FIG. 11, and/or FIG. 12.

In some embodiments, the generating an access request includes: determining a desired level of access for the user to access the one or more resources, determining a difference between the desired level of access and an existing level of access for the user, and generating the access request based at least in part on the difference. In some embodiments, the generating an access request includes: determining a plurality of desired levels of access, wherein each desired level of access of the plurality of desired levels of access can provide the user access to the one or more resources; determining a plurality of differences between the plurality of desired levels of access and an existing level of access for the user, wherein each difference of the plurality of differences is a respective difference between a desired level of access of the plurality of desired levels of access and the existing level of access; selecting a minimum difference from the plurality of differences; and generating the access request based a least in part on the minimum difference.

In some embodiments, the one or more resources include a marking, and wherein the marking corresponds to at least one selected from a group consisting of a sensitivity level, a training level, a user type, and an organization type. In some embodiments, the method include, prior to receiving the permission request: denying the user access to the one or more resources; and in response to the denying, displaying a user interface for the user to request permission to access the one or more resource, wherein the permission request is received via the displayed user interface. In some embodiments, the notifying one or more reviewers to review the access request includes: prompting the user or the one or more reviewers to take one or more actions. In some embodiments, the one or more actions include uploading a document or completing a checkpoint.

In some embodiments, the notifying one or more reviewers to review the access request includes: asking the user or the one or more reviewers to update the permission request for the user to access the one or more resources; and in response to the asking, receiving an updated permission request. In some embodiments, the permission request includes an indication (e.g., prompt) indicating why the user should have access. In some embodiments, the permission request is a blind permission request and does not include an indication (e.g., prompt) indicating why the user should have access.

According to certain embodiments, a system for managing access control to one or more resources is provided. In some examples, the system includes one or more processors and one or more memories storing instructions that, when executed by the one or more processors, cause the system to perform a set of operations. In some examples, the set of operations include: receiving a permission request for a user to access the one or more resources, generating an access request based at least in part on the permission request, notifying one or more reviewers to review the access request, receiving an indication of the access request being approved, and automatically granting permission to the user to access the one or more resources. For example, the system is implemented according to at least FIG. 1, FIG. 2, FIG. 3, FIG. 4, FIG. 5, FIG. 6, FIG. 7, FIG. 8, FIG. 9, FIG. 10, FIG. 11, FIG. 12, and/or FIG. 13.

In some embodiments, the generating an access request includes: determining a desired level of access for the user to access the one or more resources, determining a difference between the desired level of access and an existing level of access for the user, and generating the access request based at least in part on the difference. In some embodiments, the generating an access request includes: determining a plurality of desired levels of access, wherein each desired level of access of the plurality of desired levels of access can provide the user access to the one or more resources; determining a plurality of differences between the plurality of desired levels of access and an existing level of access for the user, wherein each difference of the plurality of differences is a respective difference between a desired level of access of the plurality of desired levels of access and the existing level of access; selecting a minimum difference from the plurality of differences; and generating the access request based a least in part on the minimum difference.

In some embodiments, the one or more resources include a marking, and wherein the marking corresponds to at least one selected from a group consisting of a sensitivity level, a training level, a user type, and an organization type. In some embodiments, the set of operations include, prior to receiving the permission request: denying the user access to the one or more resources; and in response to the denying, displaying a user interface for the user to request permission to access the one or more resource, wherein the permission request is received via the displayed user interface. In some embodiments, the notifying one or more reviewers to review the access request includes: prompting the user or the one or more reviewers to take one or more actions. In some embodiments, the one or more actions include uploading a document or completing a checkpoint.

In some embodiments, the notifying one or more reviewers to review the access request includes: asking the user or the one or more reviewers to update the permission request for the user to access the one or more resources; and in response to the asking, receiving an updated permission request. In some embodiments, the permission request includes a prompt indicating why the user should have access. In some embodiments, the permission request is a blind permission request and does not include a prompt indicating why the user should have access.

According to certain embodiments, a method for managing access control to one or more resources is provided. In some examples, the method includes receiving a permission request for a user to access the one or more resources and generating an access request. In some examples, the access request is generated by determining one or more desired levels of access. In some examples, each desired level of access of the one or more desired levels of access can provide the user access to the one or more resources. In some examples, the access request is further generated by determining one or more differences between the one or more desired levels of access and an existing level of access for the user. In some examples, each difference of the one or more differences is a respective difference between a desired level of access of the one or more levels of access and the existing level of access. In some examples, the access request is generated based on the one or more difference. In some examples, the method further includes receiving an indication of the access request being approved, and automatically granting permission to the user to access the one or more resources. The method is performed using one or more processors. For example, the method is implemented according to at least FIG. 1, FIG. 2, FIG. 3, FIG. 4, FIG. 5, FIG. 6, FIG. 7, FIG. 8, FIG. 9, FIG. 10, FIG. 11, and/or FIG. 12.

For example, some or all components of various embodiments of the present disclosure each are, individually and/or in combination with at least another component, implemented using one or more software components, one or more hardware components, and/or one or more combinations of software and hardware components. In an example, some or all components of various embodiments of the present disclosure each are, individually and/or in combination with at least another component, implemented in one or more circuits, such as one or more analog circuits and/or one or more digital circuits. In an example, while the embodiments described above refer to particular features, the scope of the present disclosure also includes embodiments having different combinations of features and embodiments that do not include all of the described features. In an example, various aspects of the present disclosure can be combined.

Additionally, the methods and systems described herein may be implemented on many different types of processing devices by program code comprising program instructions that are executable by the device processing subsystem. The software program instructions may include source code, object code, machine code, or any other stored data that is operable to cause a processing system (e.g., one or more components of the processing system) to perform the methods and operations described herein. Other implementations may also be used, however, such as firmware or even appropriately designed hardware configured to perform the methods and systems described herein.

The systems' and methods' data (e.g., associations, mappings, data input, data output, intermediate data results, final data results, etc.) may be stored and implemented in one or more different types of computer-implemented data stores, such as different types of storage devices and programming constructs (e.g., RAM, ROM, EEPROM, Flash memory, flat files, databases, programming data structures, programming variables, IF-THEN (or similar type) statement constructs, application programming interface, etc.). It is noted that data structures describe formats for use in organizing and storing data in databases, programs, memory, or other computer-readable media for use by a computer program.

The systems and methods may be provided on many different types of computer-readable media including computer storage mechanisms (e.g., CD-ROM, diskette, RAM, flash memory, computer's hard drive, DVD, etc.) that contain instructions (e.g., software) for use in execution by a processor to perform the methods' operations and implement the systems described herein. The computer components, software modules, functions, data stores and data structures described herein may be connected directly or indirectly to each other in order to allow the flow of data needed for their operations. It is also noted that a module or processor includes a unit of code that performs a software operation and can be implemented, for example, as a subroutine unit of code, or as a software function unit of code, or as an object (as in an object-oriented paradigm), or as an applet, or in a computer script language, or as another type of computer code. The software components and/or functionality may be located on a single computer or distributed across multiple computers depending upon the situation at hand.

The computing system can include client devices and servers. A client device and server are generally remote from each other and typically interact through a communication network. The relationship of client device and server arises by virtue of computer programs running on the respective computers and having a client device-server relationship to each other.

This specification contains many specifics for particular embodiments. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations, one or more features from a combination can in some cases be removed from the combination, and a combination may, for example, be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Although specific embodiments of the present disclosure have been described, it will be understood by those of skill in the art that there are other embodiments that are equivalent to the described embodiments. Accordingly, it is to be understood that the invention is not to be limited by the specific illustrated embodiments. Various modifications and alterations of the disclosed embodiments will be apparent to those skilled in the art. The embodiments described herein are illustrative examples. The features of one disclosed example can also be applied to all other disclosed examples unless otherwise indicated. It should also be understood that all U.S. patents, patent application publications, and other patent and non-patent documents referred to herein are incorporated by reference, to the extent they do not contradict the foregoing disclosure.

## Claims

1. A method for managing access control to one or more resources, the method comprising:
receiving a permission request for a user to access the one or more resources;
generating an access request based at least in part on the permission request by:
determining one or more desired levels of access, wherein each desired level of access of the one or more desired levels of access can provide the user access to the one or more resources;
determining one or more differences between the one or more desired levels of access and an existing level of access for the user, wherein each difference of the one or more differences is a respective difference between a desired level of access of the one or more desired levels of access and the existing level of access; and
generating the access request based on the one or more differences;
notifying one or more reviewers to review the access request;
receiving an indication of the access request being approved; and
automatically granting permission to the user to access the one or more resources;
wherein the method is performed by one or more processors.

2. The method of claim 1, wherein the generating an access request includes:
determining a plurality of desired levels of access, wherein each desired level of access of the plurality of desired levels of access provides the user access to the one or more resources;
determining a plurality of differences between the plurality of desired levels of access and an existing level of access for the user, wherein each difference of the plurality of differences is a respective difference between a desired level of access of the plurality of desired levels of access and the existing level of access;
selecting a minimum difference from the plurality of differences; and
generating the access request based a least in part on the minimum difference.

3. The method of claim 1 or claim 2, wherein the one or more resources include a marking, and wherein the marking corresponds to at least one selected from a group consisting of a sensitivity level, a training level, a user type, and an organization type.

4. The method of any preceding claim, further comprising, prior to receiving the permission request:
denying the user access to the one or more resources; and
in response to the denying, displaying a user interface for the user to request permission to access the one or more resources,
wherein the permission request is received via the displayed user interface.

5. The method of any preceding claim, wherein the notifying one or more reviewers to review the access request includes:
prompting the user or the one or more reviewers to take one or more actions, and optionally wherein the one or more actions include uploading a document or completing a checkpoint.

6. The method of any of claims 1 to 4, wherein the notifying one or more reviewers to review the access request comprises:
asking the user or the one or more reviewers to update the permission request for the user to access the one or more resources; and
in response to the asking, receiving an updated permission request.

7. The method of any preceding claim, wherein the permission request includes a prompt indicating why the user should have access, or alternatively wherein the permission request is a blind permission request and does not include a prompt indicating why the user should have access.

8. A system for managing access control to one or more resources, the system comprising:
one or more processors; and
one or more memories storing instructions that, when executed by the one or more processors, cause the system to perform a set of operations, the set of operations comprising:
receiving a permission request for a user to access the one or more resources;
generating an access request based at least in part on the permission request;
notifying one or more reviewers to review the access request;
receiving an indication of the access request being approved; and
automatically granting permission to the user to access the one or more resources.

9. The system of claim 8, wherein the generating an access request includes:
determining a desired level of access for the user to access the one or more resources;
determining a difference between the desired level of access and an existing level of access for the user; and
generating the access request based at least in part on the difference.

10. The system of claim 8, wherein the generating an access request includes:
determining a plurality of desired levels of access, wherein each desired level of access of the plurality of desired levels of access provides the user access to the one or more resources;
determining a plurality of differences between the plurality of desired levels of access and an existing level of access for the user, wherein each difference of the plurality of differences is a respective difference between a desired level of access of the plurality of desired levels of access and the existing level of access;
selecting a minimum difference from the plurality of differences; and
generating the access request based a least in part on the minimum difference.

11. The system of any of claims 8 to 10, wherein the one or more resources include a marking, and wherein the marking corresponds to at least one selected from a group consisting of a sensitivity level, a training level, a user type, and an organization type.

12. The system of any of claims 8 to 11, further comprising, prior to receiving the permission request:
denying the user access to the one or more resources; and
in response to the denying, displaying a user interface for the user to request permission to access the one or more resources,
wherein the permission request is received via the displayed user interface.

13. The system of any of claims 8 to 12, wherein the notifying one or more reviewers to review the access request includes:
prompting the user or the one or more reviewers to take one or more actions, and optionally wherein the one or more actions include uploading a document or completing a checkpoint.

14. The system of any of claims 8 to 12, wherein the notifying one or more reviewers to review the access request comprises:
asking the user or the one or more reviewers to update the permission request for the user to access the one or more resources; and
in response to the asking, receiving an updated permission request.

15. A method for managing access control to one or more resources, the method comprising:
receiving a permission request for a user to access the one or more resources;
generating an access request based at least in part on the permission request by:
determining one or more desired levels of access, wherein each desired level of access of the one or more desired levels of access can provide the user access to the one or more resources;
determining one or more differences between the one or more desired levels of access and an existing level of access for the user, wherein each difference of the one or more differences is a respective difference between a desired level of access of the one or more desired levels of access and the existing level of access; and
generating the access request based on the one or more differences;
receiving an indication of the access request being approved; and
automatically granting permission to the user to access the one or more resources;
wherein the method is performed by one or more processors.
